# EUROPEAN PATENT SPECIFICATION

(11) **EP 2 450 979 B1**
(45) Date of publication and mention of the grant of the patent: **03.05.2017**
(21) Application number: 11187615.7
(22) Date of filing: 03.11.2011
(51) Int. Cl.: H01M 2/10, H01M 6/42

(54) **Battery module**
Batteriemodul
Module de batterie

(30) Priority: 04.11.2010 KR 20100109181
(43) Date of publication of application: 09.05.2012
(73) Proprietor: Samsung SDI Co., Ltd., Gyeonggi-do (KR); Robert Bosch GmbH, 70442 Stuttgart (DE)
(72) Inventor: Kim, Myung-Chul, 446-711 Yongin-si (KR); Lee, Hyun-Ye, 446-711 Yongin-si (KR); Jin, Hee-Joon, 446-711 Yongin-si (KR)
(74) Representative: Gulde & Partner

(56) References cited:
- US-A1- 2005 202 315
- US-A1- 2006 216 579
- US-A1- 2009 263 705
- US-A1- 2010 167 115

## Description

### BACKGROUND

### 1.Field

The present invention relates to a battery module.

### Description of Related Art

In general, secondary batteries can be reused by discharging and recharging, unlike primary batteries, which can not be recharged. The secondary batteries are used as energy sources for mobile devices, electric vehicles, hybrid vehicles, electric bicycles, and uninterrruptible power supplies, and may be used in a single battery type or a battery module type composed of a plurality of batteries connected in one unit, in accordance with various available external devices.

Although small mobile devices, such as mobile phones, can operate for some time with the output and capacity of a single battery, electric modules having larger output and capacity are often more suitable to operate electric vehicles and hybrid vehicles with high power for a long time because such vehicles consume a large amount of electricity. The battery modules are used by connecting a required number of batteries in parallel or series in accordance with output and capacity. Examples of battery stacks and battery modules are disclosed in US 2005/0202315 A1, US 2006/0216579 A1, US 2009/0263705 A1, US 2010/0167115 A1.

### SUMMARY

In one embodiment, a battery module is provided that does not need specific side fixing members. Further, in another embodiment, a battery module is provided having a structure that can effectively discharge heat generated from battery cells while maintaining sufficient strength for fixing a battery array.

In one embodiment, a battery module is provided comprising: a battery array comprising a plurality of battery cells stacked together, each battery cell includes a terminal surface exposing an electrode terminal and a vent, a bottom surface substantially opposite to the terminal surface, and horizontal and vertical side surfaces extending between the bottom surface and the terminal surface; end plates arranged adjacent to outer ends of the battery array formed by the terminal surfaces of the battery cells, the end plates having electrode openings exposing the electrode terminals; an upper and a lower fixing plate extending along a horizontal side of the battery array formed by outermost horizontal side surfaces of the battery cells, the upper and lower fixing plates having side holders vertically extending along a portion of a vertical side of the battery array formed by outermost vertical side surfaces of the battery cells; and at least one horizontal insulating member located between adjacent ones of the stacked battery cells.

According to an alternative definition, a battery module is provided including a battery array having a plurality of battery cells each including a terminal surface exposing an electrode terminal and a vent, and a bottom surface substantially opposite to the terminal surface, wherein the battery cells are stacked together; end plates adjacent outer ends of the battery array and having electrode openings exposing the electrode terminals; vertical fixing plates having side holders extending along a portion of a side of the battery array; and horizontal insulating members located between adjacent ones of the stacked battery cells.

In one embodiment, the battery array includes a plurality of pairs of battery cells stacked together such that each of the bottom surfaces face each other, wherein the plurality of pairs of battery cells are stacked together such that side surfaces of the battery cells face each other, wherein one of the end plates contacts the terminal surface of at least one of the battery cells, and wherein the upper and lower fixing plates extend between and are coupled to each of the end plates. In particular, each of the end plates contacts the terminal surface of at least one of the battery cells.

Further, a vertical insulating member may be located between the bottom surfaces of adjacent ones of the battery cells. In one embodiment, the vertical insulating member has a substantially H-shaped horizontal cross section. According to another embodiment the vertical insulating member is a plastic H-beam. The vertical insulating member may be fixed to the upper and lower fixing plates. A plurality of vertical insulating members may be provided.

In one embodiment, the upper and lower fixing plates have ridges, wherein the ridges may be recessed from the upper and lower fixing plate in a longitudinal direction of the fixing plate extending between the end plates.

According to another embodiment, upper and/or lower fixing plate have/has heat dissipation holes extending therethrough. The heat dissipation holes may be located to substantially correspond to an adjacent battery cell.

Additionally, in one embodiment, the upper and/or lower fixing plate have/has a cut-off portion (or a notch) on an edge thereof facing the end plate and wherein the end plate has a body portion and an extending portion extending at an angle from an edge of the body portion and fastening through-holes on the extending portion, the fastening through holes being adjacent to the notch.

Further, the upper and/or lower fixing plate/s may include a reinforcing portion (or reinforcing wall) extending between the side holders.

The battery module according to embodiments of the present invention allows to fix the battery array without specific side fixing members. Further, according to embodiments of the present invention, it is possible to fix the battery array with sufficient strength and effectively discharge the heat produced from the battery cells.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view showing an example of a transverse type of battery module.
FIG. 2 is a schematic exploded perspective view of the battery module shown in FIG. 1.
FIG. 3A is a perspective view showing a vertical fixing plate according to an embodiment.
FIG. 3B is a front view showing the vertical fixing plate shown in FIG. 3A.
FIG. 4A is a perspective view showing a vertical fixing plate according to another embodiment.
FIG. 4B is a front view showing the vertical fixing plate shown in FIG. 4A.
FIG. 5 is a perspective view showing a vertical fixing plate with heat dissipation holes.
FIG. 6 is a perspective view showing an upper fixing plate with cut-off portions.
FIG. 7 is a bottom perspective view showing a vertical fixing plate with reinforcing portions.
FIG. 8A is a perspective view showing a vertical insulating member according to an embodiment.
FIG. 8B is a transverse cross-sectional view showing the vertical insulating member of FIG. 8A.
FIG. 9 is a perspective view showing an example of a battery module with an exemplary vertical fixing plate.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the scope of the present invention as defined in the claims. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

Hereinafter, exemplary embodiments of the present invention will be described with reference to the accompanying drawings. The terms representing directions, such as "horizontal", "vertical", "up", "down", "left", "right" used herein are considered to be based on the status shown in the drawings, if not specifically defined or stated. Further, the same reference numerals represent the same parts throughout the embodiments.

Meanwhile, the arrangement of battery cells and the stacked structure are defined as a battery array hereafter.

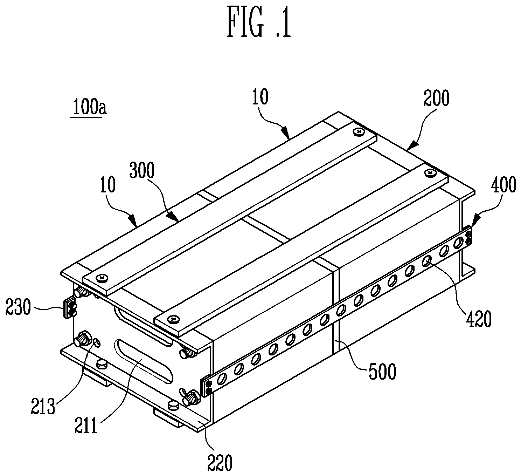

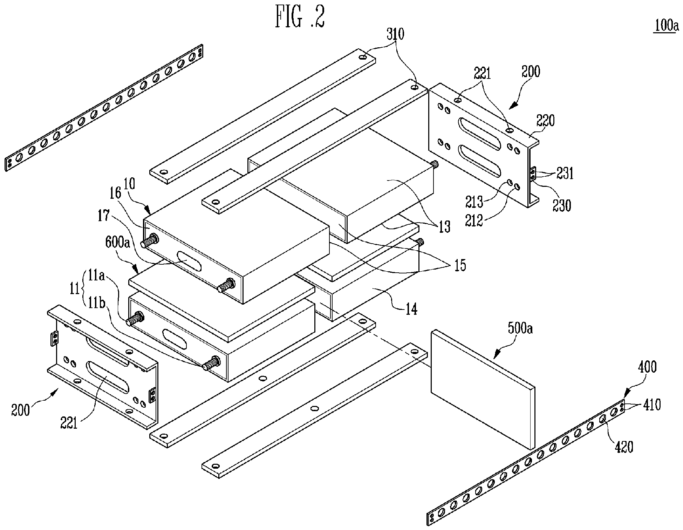

The type of a battery module 100a the present invention applies to is described with reference to FIGS. 1 and 2. FIG. 1 is a perspective view showing an example of a transverse type of battery module and FIG. 2 is an exploded perspective view of the battery module shown in FIG. 1.

The present invention can be applied to the transverse type of battery module 100a shown in FIG. 1. The transverse type of battery module 100a may include a plurality of battery cells 10 forming a battery array, a configuration for insulating, and a configuration for fixing.

In one embodiment, the battery cells 10 are generally formed in hexahedral shapes. A terminal surface 16 is provided to support both electrode terminals 11 (an anode terminal 11 b and a cathode terminal 11 a) and a vent 17. The vent 17 is formed at the center of the terminal surface 16. The vent 17 allows a gas produced in the battery cell 10 to be discharged. The electrode terminals 11 are formed on either side of the vent 17. Both electrode terminals 11 function as a path allowing the current produced in the battery cell 10 to flow to the outside. Further, the opposite side to the terminal surface 16 is referred to as a bottom surface 15 hereafter. The battery cells further comprise horizontal side surfaces 13 and vertical side surfaces 14 both extending between the bottom surface 15 and the terminal surface 16.

The battery cells 10 are transversely oriented such that the bottom surfaces 15 of two battery cells 10 face each other. The electrode terminals 11 are oriented to face the outside of the battery array. Pairs of battery cells 10 oriented as described above are stacked in two or more layers, as shown in FIG. 2. The electrode terminals 11 of the upper and lower stacked battery cells 10 may have the same polarity or opposite polarities. As shown in FIG. 2, two opposite battery cells may be provided in one layer, but single cells 10 may be stacked as well. Further, embodiments of the present invention may be applied when the number of stacked battery cells 10 is two or more, but is not limited thereto.

Fixing members are provided, which may include upper and lower fixing members 300, side fixing members 400, and end plates 200. The end plates 200 are fastened to the terminal surfaces 16 at both ends of the battery array 10 such that the electrode terminals 11 and the vent hole 17 are exposed to the outside. In one embodiment, the upper and lower fixing members 300 are located on and under the battery array 10. Specifically, the upper and lower fixing members 300 may be fixed to the top and the bottom of the end plates 200 as shown for example in FIG. 2 to restrict vertical movement of the battery array 10. The side fixing members 400 are located on the sides of the battery array 10. In one embodiment, the side fixing members 400 are fixed to both sides of the end plates 200 to restrict side movement of the battery array 10.

A vertical insulating member 500a and a horizontal insulating member 600a may be provided as insulating members. The vertical insulating member 500a is located between the bottom surfaces 15 of two opposite battery cells 10 for insulation and the horizontal insulating member 600a is located between two opposite horizontal side surfaces 13 of two stacked battery cells 10 for insulation.

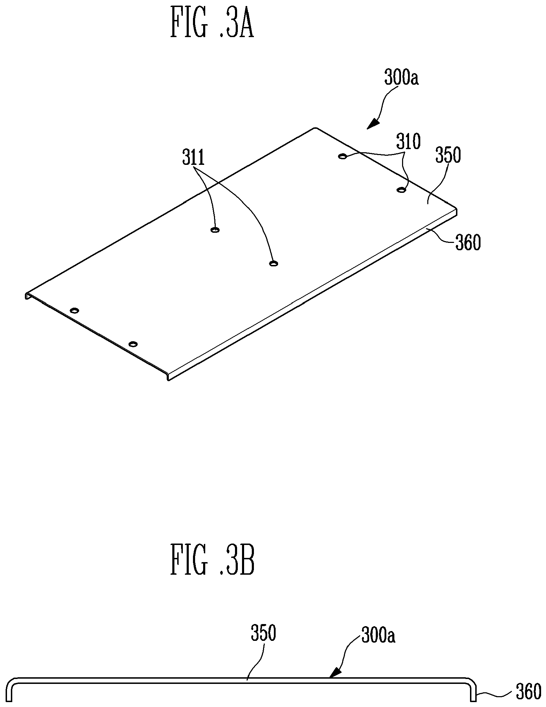

Embodiments of the present invention relate to a configuration corresponding to the upper and lower fixing plates 300a-e as described in detail below. The upper and lower fixing plates 300a-e of a battery module 100 according to the invention may have identical or different configurations.An upper or lower fixing plate 300a with holders is described with reference to FIGS. 3A and 3B. FIG. 3A is a perspective view showing an upper fixing plate according to an embodiment. FIG. 3B is a front view showing the fixing plate shown in FIG. 3A.

The fixing plate 300a has holders 360 vertically extending from the outsides of both sides of a body portion 350. Although it is possible to reduce weight by cutting off a portion of the holders 360, when the holders 360 replace the side fixing members (400 in FIGS. 1 and 2), it is advantageous in strength not to cut off the holders 360. The holders 360, as described above, contact with and hold the sides of the battery cell fixed by the upper and lower plates 300a.

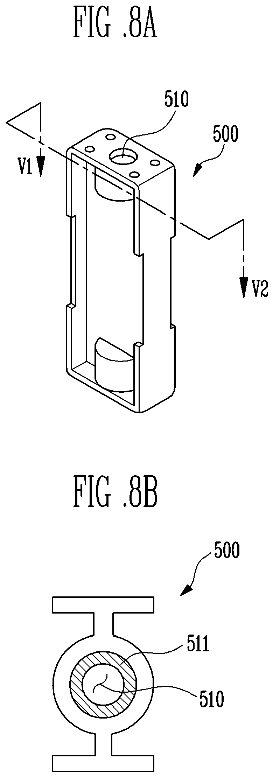

Further, through-holes 310 are formed at both ends of the body portion 350 for fastening to corresponding through-holes 221 provided in extending portions 220 of the end plates 200 (see FIGS. 1 and 2). Further, through-holes 311 for fastening to the vertical insulating member 500 (see FIG. 8A), which is described below, are formed at the center of the body 350.

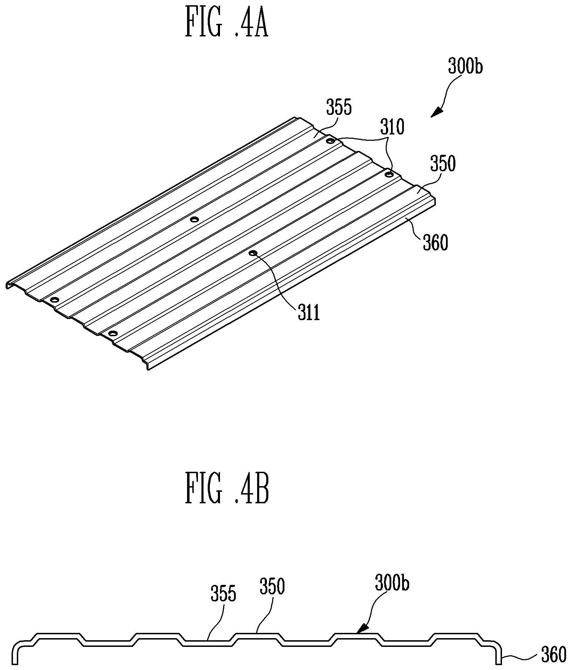

An upper or lower fixing plate 300b with ridges is described with reference to FIGS. 4A and 4B. FIG. 4A is a perspective view showing an upper fixing plate according to another embodiment. FIG. 4B is a front view showing the fixing plate shown in FIG. 4A.

The fixing plate 300b may have ridges 335 recessed from the body 350 and extending in the longitudinal direction. As shown in FIG. 4B, a plurality of ridges 355 depressed on the body 350 are formed, such that the strength against bending of the body 350 is increased.

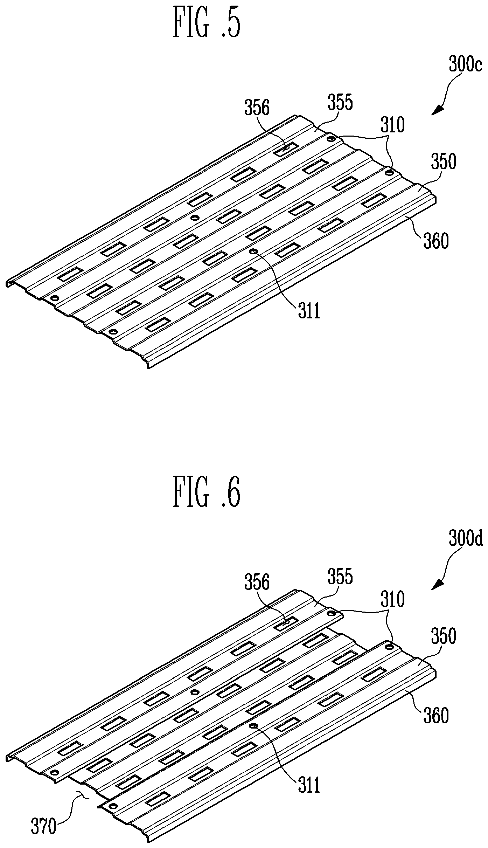

An upper or lower fixing plate with heat dissipation holes is described with reference to FIG. 5 which is a perspective view showing an upper fixing plate with heat dissipation holes.

In one embodiment, heat dissipation holes 356 may be formed in a fixing plate 300c. The heat dissipation holes 356 function as paths for discharging internal heat produced in the battery cells 10 to the outside. Further, because the internal heat is usually produced around the battery cells, the heat dissipation holes 356 may be located to substantially correspond to the battery cells when a battery module is formed. The heat dissipation holes 356 may be formed on the body portion 350 or on the ridges 355 and the appropriate number is determined with respect to the desired strength of the fixing plate 300c.

An upper or lower fixing plate 300d with cut-off portions or notches is described with reference to FIG. 6, which illustrates a perspective view showing an upper fixing plate with cut-off portions.

Cut-off portions 370 are formed at generally the center portions of both ends of the upper fixing plate 300d. As shown in the figure, the cut-off portions are portions which are recessed from the fixing plate 300d. In one embodiment, a tool is used in the cut-off portions 370 in order to assemble one battery module by combining the components described above or to fix the combined battery modules to an object, such as an electric vehicle. In particular, it may be difficult to fix the battery module in an electric vehicle requiring large capacity and/or high output because the space for the battery module is small. The fixing work can be more easily performed with the inclusion of the cut-off portions 370.

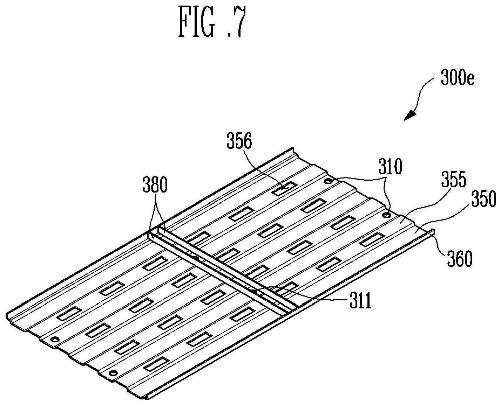

An upper or lower fixing plate 300e with reinforcing portions is described with reference to FIG. 7 which illustrates a bottom perspective view showing a vertical fixing plate with reinforcing portions.

As shown in FIG. 7, reinforcing portions 380 may be located on the inner side of the fixing plate 300e and extend across the plate. The reinforcing portions 380 are connected to holders 360 at both sides, thereby increasing the structural strength of the fixing plate 300e. The reinforcing portions 380 may be formed anywhere on the vertical fixing plate 300e, and in one embodiment are formed on both sides of a fastening through-hole 311 at the center of the fixing plate 300e to avoid interfering with the battery cells during assembly of a battery module.

A vertical insulating member is described with reference to FIGS. 8A and 8B. FIG. 8A is a perspective view showing a vertical insulating member according to an embodiment and FIG. 8B is a horizontal cross-sectional view of the vertical insulating member of FIG. 8A.

As shown in FIG. 2, the vertical insulating member 500a is located between the bottom surfaces 15 of the battery array for insulation.

The vertical insulating member 500 may be used to insulate the bottom surfaces 15 of the battery cells 10, for example in a plate shape as described above, regardless of the shape of the battery cells. Often, the battery cells 10 expand slightly when being repeatedly charged and discharged. According to an embodiment of a battery module, since the distance between both terminal surfaces 16 of battery cells 10 in one array is relatively large, the upper and lower fixing members 300a may not sufficiently compress the battery cells 10 together. The vertical insulating member 500 may be an H-beam (i.e., a cross-section of the insulating member 500 is substantially H-shaped) shown in FIGS. 8A and 8B. Thread-fastening portions 510 may be formed at the upper and lower ends of the H-beam to be connected with the upper and lower fixing plates 300a. A metal layer 511 may be further formed by double injection molding to reinforce the strength of the thread-fastening portions 510. The thread-fastening portion 510 and the second through-hole 311 described above are coupled by a bolt in assembling this embodiment.

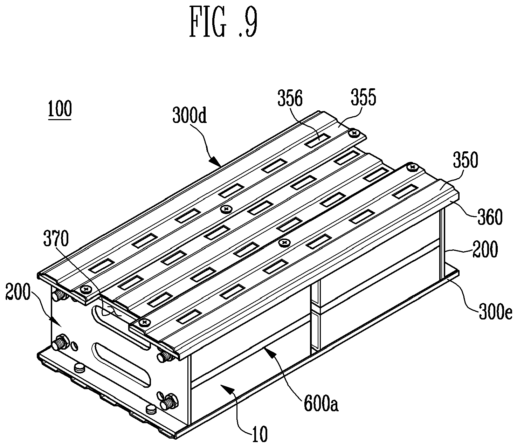

An example of a battery module with a fixing plate is described with reference to FIG. 9 which illustrates a perspective view of an exemplary battery module with the upper fixing plate 300d of FIG. 6 and the lower fixing plate 300e of FIG. 7.

As described above, the upper fixing plate 300d is located on the battery module 100 and fixed to the end plates 200 at both ends. Further, the lower fixing plate 300e is located under the battery module 100 and fixed to the end plates 200 at both ends. The upper and lower fixing plates 300d, 300e restrict side movement in addition to vertical movement of the battery array 10. Further, the heat produced from the battery cells 10 can be easily discharged through the heat dissipation holes 356, even after the battery cells 10 stop operating.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A battery module (100) comprising:
a battery array comprising a plurality of battery cells (10) stacked together, each battery cell (10) includes a terminal surface (16) exposing an electrode terminal (11) and a vent (17), a bottom surface (15) opposite to the terminal surface (16), and horizontal and vertical side surfaces (13, 14) extending between the bottom surface (15) and the terminal surface (16);
end plates (200) adjacent to outer ends of the battery array formed by the terminal surfaces (16) of the battery cells (10), the end plates (200) having electrode openings (212) exposing the electrode terminals (11);
an upper and a lower fixing plate (300a-e) extending along a horizontal side of the battery array formed by outermost horizontal side surfaces (13) of the battery cells (10), the upper and lower fixing plates (300a-e) having side holders (360) vertically extending along a portion of a vertical side of the battery array formed by outermost vertical side surfaces (14) of the battery cells (10); and
at least one horizontal insulating member (600a) located between adjacent ones of the stacked battery cells (10).

2. The battery module (100) according to claim 1, wherein the battery array comprises a plurality of pairs of battery cells (10) stacked together such that each of the bottom surfaces (15) face each other,
wherein the plurality of pairs of battery cells (10) are stacked together such that side surfaces of the battery cells face each other,
wherein each of the end plates (200) contacts the terminal surface (16) of at least one of the battery cells (10), and
wherein the upper and lower fixing plates (300a-e) extend between and are coupled to each of the end plates (200).

3. The battery module (100) according to claim 1 or 2, wherein the battery array comprises at least one pair of battery cells (10) stacked together such that each of the bottom surfaces (15) face each other and a vertical insulating member (500) is located between the bottom surfaces (15) of adjacent ones of the battery cells (10).

4. The battery module (100) according to claim 3, wherein the vertical insulating member (500) has a substantially H-shaped horizontal cross section.

5. The battery module (100) according to any of claim 3 or 4, wherein the vertical insulating member (500) is a plastic H-beam.

6. The battery module (100) according to any of preceding claims 3 to 5, wherein the vertical insulating member (500) is fixed to the upper and lower fixing plates (300a-e).

7. The battery module (100) according to any of preceding claims 3 to 6, comprising a plurality of vertical insulating members (500).

8. The battery module (100) according to any of preceding claims 1 to 7, wherein the upper and lower fixing plates (300a-e) have ridges (355).

9. The battery module according to claim 8, wherein the ridges (355) are recessed from the fixing plate (300a-e) in a longitudinal direction of the fixing plate (300a-e) extending between the end plates (200).

10. The battery module (100) according to any of preceding claims 1 to 9, wherein the upper and lower fixing plates (300a-e) have heat dissipation holes (356) extending therethrough.

11. The battery module (100) according to claim 10, wherein the heat dissipation holes (356) are located to substantially correspond to an adjacent battery cell (10),

12. The battery module (100) according to any of preceding claims 1 to 11, wherein the upper and/or lower fixing plate (300a-e) have/has a cut-off portion (370) on an edge thereof facing the end plate (200) and wherein the end plate (200) has a body portion and an extending portion (220) extending at an angle from an edge of the body portion and fastening through-holes (221) on the extending portion (220), the fastening through holes (221) being adjacent to the cut-off portion (370).

13. The battery module (100) according to any of preceding claims 1 to 12, wherein the upper and/or lower fixing plate (300a-e) comprise/s a reinforcing portion (380) extending between the side holders.

## Patentansprüche

1. Batteriemodul (100), aufweisend:
eine Batterieanordnung, die eine Vielzahl von Batteriezellen (10), die aufeinander gestapelt sind, aufweist, wobei jede Batteriezelle (10) eine Anschlussfläche (16), die einen Elektrodenanschluss (11) und eine Entlüftungsöffnung (17) freilegt, eine Bodenfläche (15), die der Anschlussfläche (16) gegenüberliegt, und eine horizontale und eine vertikale Seitenfläche (13, 14), die sich zwischen der Bodenfläche (15) und der Anschlussfläche (16) erstrecken, aufweist;
Endplatten (200), die benachbart zu äußeren Enden der Batterieanordnung, die durch die Anschlussflächen (16) der Batteriezellen (10) ausgebildet werden, sind, wobei die Endplatten (200) Elektrodenöffnungen (212), die die Elektrodenanschlüsse (11) freilegen, aufweisen;
eine obere und eine untere Befestigungsplatte (300a-e), die sich entlang einer horizontalen Seite der Batterieanordnung, die durch äußerste horizontale Seitenflächen (13) der Batteriezellen (10) ausgebildet wird, erstrecken, wobei die obere und untere Befestigungsplatte (300a-e) Seitenhalter (360), die sich vertikal entlang eines Abschnitts einer vertikalen Seite der Batterieanordnung, die durch äußerste vertikale Seitenflächen (14) der Batteriezellen (10) ausgebildet wird, erstrecken, aufweisen; und
zumindest ein horizontales Isolierelement (600a), das zwischen benachbarten der gestapelten Batteriezellen (10) angeordnet ist.

2. Batteriemodul (100) nach Anspruch 1, wobei die Batterieanordnung eine Vielzahl von Paaren von Batteriezellen (10), die derart aufeinander gestapelt sind, das jede der Bodenflächen (15) einander zugewandt ist, aufweist,
wobei die Vielzahl der Paare der Batteriezellen (10) derart aufeinander gestapelt ist, dass Seitenflächen der Batteriezellen einander zugewandt sind,
wobei jede der Endplatten (200) mit der Anschlussfläche (16) zumindest einer der Batteriezellen (10) in Kontakt steht, und
wobei sich die obere und untere Befestigungsplatte (300a-e) zwischen jeder der Endplatten (200) erstrecken und mit jeder der Endplatten (200) gekoppelt sind.

3. Batteriemodul (100) nach Anspruch 1 oder 2, wobei die Batterieanordnung zumindest ein Paar Batteriezellen (10), die derart miteinander gestapelt sind, dass jede der Bodenflächen (15) einander zugewandt ist und ein vertikales Isolierelement (500) zwischen den Bodenflächen (15) benachbarter der Batteriezellen (10) angeordnet ist, aufweist.

4. Batteriemodul (100) nach Anspruch 3, wobei das vertikale Isolierelement (500) einen im Wesentlichen H-förmigen horizontalen Querschnitt aufweist.

5. Batteriemodul (100) nach einem von Anspruch 3 oder 4, wobei das vertikale Isolierelement (500) ein H-Träger aus Kunststoff ist.

6. Batteriemodul (100) nach einem der vorhergehenden Ansprüche 3 bis 5, wobei das vertikale Isolierelement (500) an der oberen und unteren Befestigungsplatte (300a-e) befestigt ist.

7. Batteriemodul (100) nach einem der vorhergehenden Ansprüche 3 bis 6, aufweisend eine Vielzahl vertikaler Isolierelemente (500).

8. Batteriemodul (100) nach einem der vorhergehenden Ansprüche 1 bis 7, wobei die obere und untere Befestigungsplatte (300a-e) Rippen (355) aufweisen.

9. Batteriemodul nach Anspruch 8, wobei die Rippen (355) in einer Längsrichtung der Befestigungsplatte (300a-e), die sich zwischen den Endplatten (200) erstreckt, gegenüber der Befestigungsplatte (300a-e) vertieft sind.

10. Batteriemodul (100) nach einem der vorhergehenden Ansprüche 1 bis 9, wobei die obere und untere Befestigungsplatte (300a-e) Wärmeabführungslöcher (356), die sich durch sie hindurch erstrecken, aufweisen.

11. Batteriemodul (100) nach Anspruch 10, wobei die Wärmeabführungslöcher (356) im Wesentlichen mit einer benachbarten Batteriezelle (10) korrespondierend angeordnet sind.

12. Batteriemodul (100) nach einem der vorhergehenden Ansprüche 1 bis 11, wobei die obere und/oder untere Befestigungsplatte (300a-e) einen abgeschnittenen Abschnitt (370) auf einem Rand davon, der der Endplatte (200) zugewandt ist, aufweisen/aufweist, und wobei die Endplatte (200) einen Körperabschnitt und einen Erstreckungsabschnitt (220), der sich in einem Winkel von einem Rand des Körperabschnitts erstreckt, und Befestigungsdurchgangslöcher (221) auf dem Erstreckungsabschnitt (220) aufweist, wobei die Befestigungsdurchgangslöcher (221) benachbart zum abgeschnittenen Abschnitt (370) sind.

13. Batteriemodul (100) nach einem der vorhergehenden Ansprüche 1 bis 12, wobei die obere und/oder untere Befestigungsplatte (300a-e) einen Verstärkungsabschnitt (380), der sich zwischen den Seitenhaltern erstreckt, aufweisen/aufweist.

## Revendications

1. Module de batterie (100) comprenant :
un réseau de batteries comprenant une pluralité d'éléments de batterie (10) empilés, chaque élément de batterie (10) comprend une surface de borne (16) exposant une borne d'électrode (11) et un évent (17), une surface inférieure (15) opposée à la surface de borne (16), et des surfaces latérales horizontale et verticale (13, 14) s'étendant entre la surface inférieure (15) et la surface de borne (16) ;
des plaques d'extrémité (200) adjacentes aux extrémités externes du réseau de batteries formées par les surfaces de borne (16) des éléments de batterie (10), les plaques d'extrémité (200) ayant des ouvertures d'électrode (212) exposant les bornes d'électrode (11) ;
une plaque de fixation supérieure et une plaque de fixation inférieure (300a-e) s'étendant le long d'un côté horizontal du réseau de batteries formé par les surfaces latérales horizontales situées le plus à l'extérieur (13) des éléments de batterie (10), les plaques de fixation supérieure et inférieure (300a-e) ayant des supports latéraux (360) s'étendant verticalement le long d'une partie d'un côté vertical du réseau de batteries formé par les surfaces latérales verticales situées le plus à l'extérieur (14) des éléments de batterie (10) ; et
au moins un élément isolant horizontal (600a) positionné entre les éléments adjacents des éléments de batterie (10) empilés.

2. Module de batterie (100) selon la revendication 1, dans lequel le réseau de batteries comprend une pluralité de paires d'éléments de batterie (10) empilées de sorte que chacune des surfaces inférieures (15) se font face,
dans lequel la pluralité de paires d'éléments de batterie (10) sont empilées ensemble de sorte que les surfaces latérales des éléments de batterie se font face,
dans lequel chacune des plaques d'extrémité (200) est en contact avec la surface de borne (16) d'au moins l'un des éléments de batterie (10), et
dans lequel les plaques de fixation supérieure et inférieure (300a-e) s'étendent entre et sont couplées à chacune des plaques d'extrémité (200).

3. Module de batterie (100) selon la revendication 1 ou 2, dans lequel le réseau de batteries comprend au moins une paire d'éléments de batterie (10) empilés de sorte que chacune des surfaces inférieures (15) se font face et un élément isolant vertical (500) est positionné entre les surfaces inférieures (15) des éléments adjacents des éléments de batterie (10).

4. Module de batterie (100) selon la revendication 3, dans lequel l'élément isolant vertical (500) a une section transversale horizontale sensiblement en forme de H.

5. Module de batterie (100) selon l'une quelconque des revendications 3 et 4, dans lequel l'élément isolant vertical (500) est une poutre en H en plastique.

6. Module de batterie (100) selon l'une quelconque des revendications 3 à 5, dans lequel l'élément isolant vertical (500) est fixé sur les plaques de fixation supérieure et inférieure (300a-e).

7. Module de batterie (100) selon l'une quelconque des revendications 3 à 6, comprenant une pluralité d'éléments isolants verticaux (500).

8. Module de batterie (100) selon l'une quelconque des revendications 1 à 7, dans lequel les plaques de fixation supérieure et inférieure (300a-e) ont des crêtes (355).

9. Module de batterie selon la revendication 8, dans lequel les crêtes (355) sont enfoncées par rapport à la plaque de fixation (300a-e) dans une direction longitudinale de la plaque de fixation (300a-e) s'étendant entre les plaques d'extrémité (200).

10. Module de batterie (100) selon l'une quelconque des revendications 1 à 9, dans lequel les plaques de fixation supérieure et inférieure (300a-e) ont des trous de dissipation de chaleur (356) s'étendant à travers ces dernières.

11. Module de batterie (100) selon la revendication 10, dans lequel les trous de dissipation de chaleur (356) sont positionnés pour correspondre sensiblement à un élément de batterie (10) adjacent.

12. Module de batterie (100) selon l'une quelconque des revendications 1 à 11, dans lequel la plaque de fixation supérieure et/ou la plaque de fixation inférieure (300a-e) ont/a une partie découpée (370) sur leur (son) bord faisant face à la plaque d'extrémité (200) et dans lequel la plaque d'extrémité (200) a une partie de corps et une partie d'extension (220) s'étendant à un angle à partir d'un bord de la partie de corps et des trous traversants de fixation (221) sur la partie d'extension (220), les trous débouchants de fixation (221) étant adjacents à la partie découpée (370).

13. Module de batterie (100) selon l'une quelconque des revendications 1 à 12, dans lequel la plaque de fixation supérieure et/ou la plaque de fixation inférieure (300a-e) comprennent/comprend une partie de renforcement (380) s'étendant entre les supports latéraux.
